(19) Europäisches Patentamt / European Patent Office / Office européen des brevets

(11) **EP 1 523 655 B1**

(12) **FASCICULE DE BREVET EUROPEEN**

(45) Date de publication et mention
de la délivrance du brevet:
**09.02.2011 Bulletin 2011/06**

(21) Numéro de dépôt: **03765135.3**

(22) Date de dépôt: **04.07.2003**

(51) Int Cl.:
**G01C 5/00** *(2006.01)*    **G05D 1/02** *(2006.01)*

(86) Numéro de dépôt international:
**PCT/FR2003/002082**

(87) Numéro de publication internationale:
**WO 2004/010079 (29.01.2004 Gazette 2004/05)**

(54) **PROCEDE ET DISPOSITIF D'AIDE A LA NAVIGATION D'UN AERONEF**

FLUGZEUGNAVIGATIONSHILFEEINRICHTUNG UND VERFAHREN

AIRCRAFT NAVIGATION ASSISTANCE DEVICE AND METHOD

(84) Etats contractants désignés:
**DE FR GB**

(30) Priorité: **19.07.2002 FR 0209208**

(43) Date de publication de la demande:
**20.04.2005 Bulletin 2005/16**

(73) Titulaire: **Thales**
**75008 Paris (FR)**

(72) Inventeur: **BERTHE, Benoît,**
**Thales Intellectual Property**
**F-94117 Arcueil Cedex (FR)**

(74) Mandataire: **Esselin, Sophie**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 802 469    FR-A- 2 813 963**

**Description**

L'invention concerne un procédé d'aide à la navigation d'un aéronef.

Le domaine de l'invention est celui de l'aide à la navigation et à la sécurité aériennes et concerne plus particulièrement les manoeuvres d'évitement de terrain.

On connaît déjà des dispositifs embarqués permettant de réaliser des manoeuvres d'évitement vertical.

Un tel dispositif décrit dans le brevet EP 0 565 399 comprend notamment une mémoire de masse pour le stockage de données topographiques représentant une part substantielle de la surface de la terre, une mémoire de travail à accès rapide dans laquelle sont transférées les données topographiques correspondant à la zone de vol de l'aéronef et des moyens de prédiction de la trajectoire de l'aéronef, basés sur des indications d'état relatives à la longitude, la latitude, l'altitude, la vitesse et l'accélération de l'aéronef. La trajectoire prévue est comparée aux données topographiques de la mémoire à accès rapide ; en cas de collision potentielle avec le terrain, une alarme est déclenchée et une manoeuvre d'évitement vertical est suggérée au pilote.

Dans certains cas, particulièrement lors d'approches ou de décollages en zone montagneuse, l'aéronef se rapproche du terrain sans que cela constitue une menace ou anomalie. Le dispositif anti-collision est alors positionné dans un mode spécifique permettant de réduire le taux de fausses alarmes ; mais lorsqu'une menace est détectée, la manoeuvre d'évitement vertical n'est souvent plus possible

Un autre dispositif décrit dans le brevet EP 0 802 469, perfectionnement du dispositif précédent, permet en plus de suggérer au pilote une manoeuvre d'évitement latéral lorsque la manoeuvre d'évitement vertical n'est plus possible. Une première puis une deuxième alarme sont déclenchées lorsque l'aéronef franchit respectivement un seuil de 20 puis de 5 secondes avant le point de non retour, c'est-à-dire avant le point ultime à partir duquel une manoeuvre d'évitement doit absolument avoir été amorcée.

Ces seuils prédéterminés ne sont pas toujours adaptés à la zone de vol de l'aéronef et ce dispositif ne permet pas de suivre continûment l'évolution du danger ; il ne permet pas de quantifier réellement le danger, c'est-à-dire de déterminer continûment le temps restant pour engager une manoeuvre d'évitement latéral à droite ou à gauche avant le point de non retour.

Un but important de l'invention est donc de déterminer continûment le temps restant pour engager une manoeuvre d'évitement avant le point de non retour.

Pour atteindre ces buts, l'invention propose un procédé d'aide à la navigation d'un aéronef, principalement caractérisé en ce qu'il comprend les étapes suivantes consistant à :

a) définir une zone à palper à droite et à gauche d'une première trajectoire fictive de l'aéronef, dénommée trajectoire support de palpeur,
b) palper pour chacune des deux zones à palper à droite et à gauche, un relief sous-jacent correspondant prédéterminé, en vue d'identifier des sous-zones dangereuses à droite et/ou à gauche,
c) calculer pour chacune des sous-zones dangereuses à droite et/ou à gauche, un temps $\Delta T$ restant pour débuter une manoeuvre d'évitement avant un point de non retour, et déterminer pour les sous-zones dangereuses à droite un $\Delta T$ minimal noté $\Delta T$ droite et/ou pour les sous-zones dangereuses à gauche un $\Delta T$ minimal noté $\Delta T$ gauche,
d) établir une aide à la navigation à partir de $\Delta T$ droite et/ou $\Delta T$ gauche.

Le procédé selon l'invention comprend ainsi plusieurs étapes consistant principalement à palper le long d'une trajectoire support de palpeur de l'aéronef et de chaque côté de celle-ci, le relief sous-jacent à une zone repérée par exemple par des mailles, à identifier les mailles présentant un danger potentiel et, pour ces mailles, le temps restant avant d'engager une manoeuvre d'évitement.

Selon une caractéristique de l'invention, la trajectoire support de palpeur est déterminée pendant un temps T décomposé en un temps $T_{réac}$ de réaction du pilote, un temps $T_{res}$ de mise en trajectoire horizontale de l'aéronef et un temps $T_{roul}$ de mise en roulis de l'aéronef.

Selon une autre caractéristique de l'invention, les sous-zones dangereuses de l'étape b) sont identifiées en fonction d'une deuxième trajectoire fictive de l'aéronef telle que :

dans le cas où l'aéronef est en montée, la montée est immédiatement interrompue,
dans les autres cas, la trajectoire est poursuivie sans changement.

Cette deuxième trajectoire fictive vise à accroître la marge de sécurité du procédé.

Le temps $\Delta T$ de l'étape c) est avantageusement calculé en fonction d'un temps de vol fictif vers une sous-zone dangereuse, évalué en fonction d'un temps $T_{res}$ de mise en trajectoire horizontale de l'aéronef et d'un temps $T_{roul}$ de mise en roulis de l'aéronef :

dans un plan horizontal lorsque l'aéronef est en montée ou en palier,
dans un plan horizontal et dans un plan vertical lorsque l'aéronef est en descente.

Selon une caractéristique additionnelle de l'invention, l'étape d) comporte une étape de comparaison de ΔT droite et/ou ΔT gauche à un ou plusieurs temps prédéterminés et éventuellement une étape consistant à déterminer le temps restant pour le côté le plus sûr à partir du maximum entre ΔT droite et/ou ΔT gauche et le temps restant pour le côté le moins sûr à partir du minimum entre ΔT droite et/ou ΔT gauche.

L'invention a également pour objet un dispositif d'aide à la navigation d'un aéronef, comportant une mémoire de masse apte à stocker une base de données terrain, une mémoire de programme comportant un programme d'application du procédé tel que décrit, une unité centrale apte à mettre en oeuvre le programme et une interface d'entrée-sortie.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement des couronnes droite Cd et gauche Cg dans un cas dissymétrique,
les figures 2a, 2b représentent schématiquement dans un plan horizontal, des exemples de zones à palper dans les cas d'une trajectoire initiale rectiligne (2a) et en virage (2b) et la figure 2c représente schématiquement dans un plan vertical un exemple de trajectoire support de ces zones à palper,
la figure 3 représente schématiquement le maillage du relief sous-jacent à une couronne Cd,
les figures 4a et 4b représentent respectivement et schématiquement dans un plan vertical puis horizontal, les tronçons de trajectoire pendant des temps définis, et la figure 4c illustre schématiquement dans un plan horizontal le temps restant pour le côté le plus sûr et le côté le moins sûr,
la figure 5 représente schématiquement un exemple de présentation d'informations d'aide à la navigation,
la figure 6 représente schématiquement un exemple de dispositif apte à mettre en oeuvre le procédé d'aide à la navigation tel que décrit.

L'invention concerne l'aide à la navigation d'un aéronef ; dans la suite on va prendre comme exemple d'aéronef un avion. On va aussi considérer que l'aide à la navigation concerne le pilote ; elle peut plus généralement concerner un organe de pilotage dans le cas notamment d'un pilotage automatique.

Le procédé selon l'invention comprend plusieurs étapes consistant principalement à palper le long d'une trajectoire fictive de l'avion et de chaque côté de celle-ci, le relief sous-jacent à une bande de terrain repérée par des mailles, à identifier les mailles présentant un danger potentiel et, pour ces mailles, le temps restant avant d'engager une manoeuvre d'évitement.

La première étape consiste à définir une zone à palper à droite et à gauche d'une trajectoire fictive de l'avion désignée par la suite trajectoire support de palpeur et qui est déterminée pendant un temps T comme on le verra plus loin.

On désigne par palpeur ou zone à palper la forme définie par une succession de couronnes le long de cette trajectoire support de palpeur.

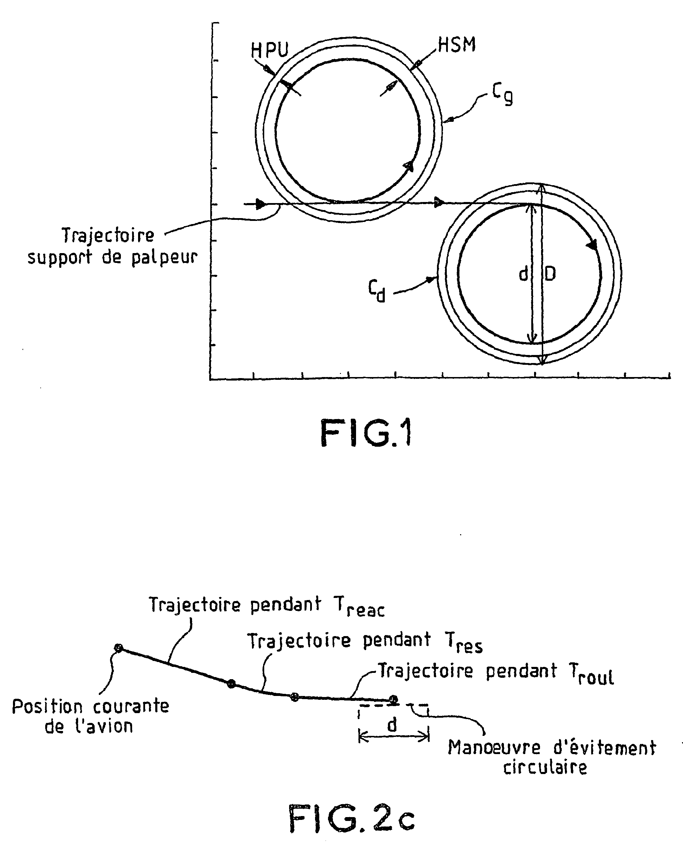

Deux couronnes respectivement droite Cd et gauche Cg sont représentées figure 1. Le diamètre D de chaque couronne est de la forme :

$$D= d + HSM + HPU$$

d étant le diamètre du cercle de la manoeuvre d'évitement, HSM une marge horizontale de sécurité, HPU une incertitude sur la position horizontale.

Pour un avion de type Airbus 340, on a par exemple HSM = 220 metHPU=100m.

Comme on peut le voir sur la figure 1, les couronnes droite Cd et gauche Cg chevauchent la trajectoire support de palpeur; elles se chevauchent également l'une l'autre lorsqu'elles ne sont pas décalées comme représenté sur cette figure 1. Seuls les cercles d'évitement droit et gauche sont tangents à la trajectoire et tangents entre eux lorsque les couronnes ne sont pas décalées.

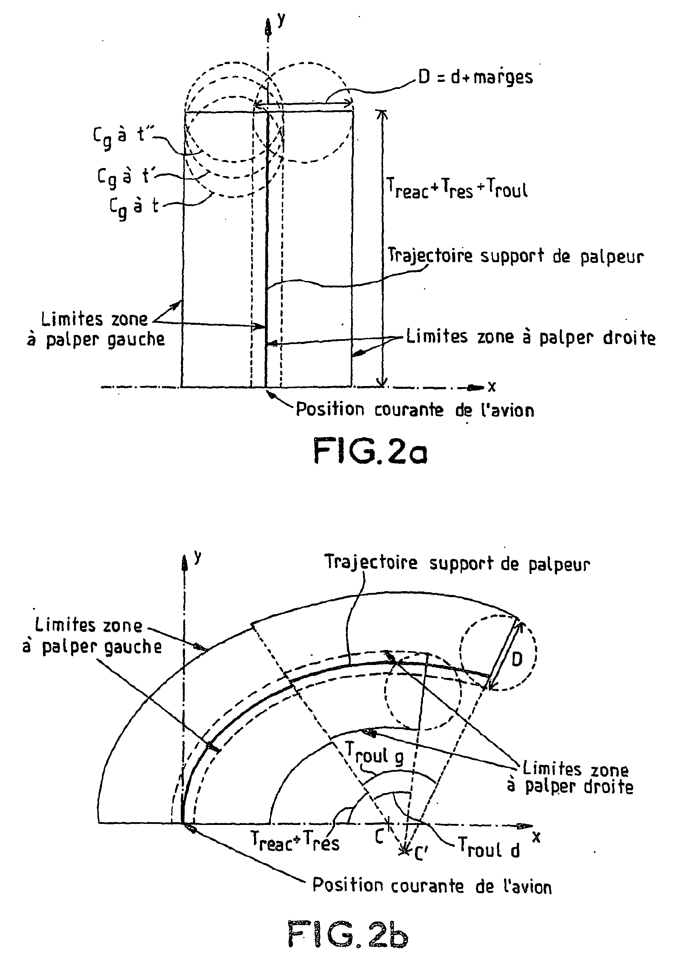

A partir de la position courante de l'aéronef, les couronnes droites se succèdent continûment en restant tangentes à la trajectoire support de palpeur ; de même pour les couronnes gauche Cg. On a représenté figure 2a trois couronnes gauches Cg se succédant à des instants t, t' et t''. Ces successions de couronnes intervenant entre l'instant t0 correspondant à la position courante de l'avion et un instant T défini plus loin, définissent ainsi une zone à palper à droite et à gauche représentées dans un plan horizontal figures 2a et 2b selon que la trajectoire initiale de l'avion est rectiligne ou en virage. Ces zones à palper ont la forme de bandes.

La trajectoire support de palpeur de l'avion est déterminée pendant un temps T= $T_{réac}+T_{res}+T_{roul}$, des tronçons de trajectoire correspondant respectivement à ces temps $T_{réac}$, $T_{res}$ et $T_{roul}$ comme représenté dans un plan vertical figure 2c. On désigne par :

- $T_{réac}$, le temps de réaction du pilote (voire de l'organe de pilotage) avant qu'il ne débute la manoeuvre d'évitement, c'est-à-dire le temps durant lequel l'avion poursuit sa trajectoire sans évolution des paramètres (vitesse inchangée en valeur absolue, rayon de virage inchangé si l'avion est en virage, pente inchangée si l'avion est en descente). Ce temps $T_{réac}$ est défini par défaut ; on peut prendre par exemple $T_{réac}$ = 25 sec. lorsque l'avion est en descente et on prendra $T_{réac}$= 0 sec. lorsque l'avion est en montée,

- $T_{res}$ le temps nécessaire à l'avion pour effectuer une ressource dans le plan vertical, c'est-à-dire pour rejoindre une trajectoire horizontale que l'avion soit initialement en descente ou en montée ; lorsque la situation impose d'effectuer une manoeuvre d'évitement latéral, le pilote va tout d'abord se sécuriser vis-à-vis du relief dans le plan vertical en interrompant au plus tôt son évolution verticale ; on a classiquement $T_{res}$ = $|\gamma_o|$ x V/fcv, $\gamma_o$ étant la pente de l'avion, V sa vitesse courante et fcv son facteur de charge vertical.

- $T_{roul}$ qui est le temps de mise en roulis de l'avion en vue d'effectuer une mise en virage (ou cercle) d'évitement ; la mise en roulis consiste à amener le roulis de sa valeur initiale à une valeur finale égale par exemple à $\pm$ 33° (le signe dépendant du sens du virage vers la droite ou vers la gauche) en tenant compte d'un taux de roulis égal par exemple à 7°/sec pour un avion de type A340. $T_{roul}$ peut être égal à 0 lorsque la mise en roulis coïncide avec le virage courant de l'avion. Bien qu'une mise en roulis se traduise par une mise en virage, on considère de façon artificielle que la trajectoire support du palpeur pendant ce temps $T_{roul}$, est la même que la trajectoire courante et est donc rectiligne si la trajectoire courante de l'avion était rectiligne : cela correspond à une marge de sécurité supplémentaire.

Comme représenté dans le plan horizontal sur la figure 2a, lorsque la trajectoire courante de l'avion est rectiligne, c'est-à-dire présentant un angle de roulis inférieur à 1° par exemple, le temps $T_{réac}$+$T_{res}$+$T_{rou}$ pour chacune des couronnes est le même à droite et à gauche de la trajectoire support du palpeur et les zones à palper à droite et à gauche sont identiques.

Lorsque la trajectoire courante de l'avion est en virage, comme représenté dans le plan horizontal sur la figure 2b dans le cas d'un virage courant à droite, les zones à palper à droite et à gauche diffèrent non seulement pour des raisons évidentes de géométrie mais aussi parce que le temps $T_{réac}$+$T_{res}$+$T_{roul}$ diffère entre une couronne à droite et une couronne à gauche. En effet, les temps $T_{réac}$ et $T_{res}$ sont identiques ; mais lorsque la mise en roulis consiste à continuer ou accentuer le roulis du virage courant, le temps de mise en roulis est inférieur au cas contraire pour lequel il faut d'abord rétablir une trajectoire rectiligne avant la mise en roulis souhaitée opposée au roulis du virage courant. On distingue alors un temps de mise en roulis à droite $T_{rould}$ et un temps de mise en roulis à gauche $T_{roulg}$. Dans le cas d'un virage courant à droite comme représenté sur la figure 2b, on obtient $T_{rould}$ < $T_{roulg}$.

En outre, on prévoit de préférence que la vitesse $V_{vir}$ à laquelle est effectuée la manoeuvre pendant $T_{roulg}$ ou $T_{rould}$ est égale à la vitesse de l'avion lors de sa position courante majorée de x%. (x% =10% par exemple). Cette variation de vitesse intervient pendant $T_{réac}$+$T_{res}$. La trajectoire support de palpeur comporte alors deux parties : le point C est le centre du cercle représentant la trajectoire support de palpeur pendant $T_{réac}$+$T_{res}$ et C' le centre du cercle représentant la trajectoire support de palpeur pendant $T_{rould}$ ou $T_{roulg}$, le virage s'effectuant à la vitesse $V_{vir}$. Bien que la trajectoire pendant $T_{réac}$+$T_{res}$ ne soit pas exactement un cercle, puisque la vitesse varie, elle s'en approche suffisamment pour que l'on fasse cette approximation.

Globalement, la trajectoire support de palpeur est, dans le plan horizontal, la continuation de la ligne droite ou du virage en cours (à cette approximation près), pendant $T_{réac}$+$T_{res}$+$T_{roul}$. Dans le plan vertical, l'évolution verticale est interrompue pour rejoindre une trajectoire horizontale, pendant $T_{réac}$+$T_{res}$ lorsque l'avion est en descente et pendant $T_{res}$ lorsque l'avion est en montée (ce qui correspond au pire cas en montée).

L'avion dispose par ailleurs d'une base de données terrain comportant des données topographiques représentatives du relief de la terre et notamment de celui que survole ou va survoler l'avion. Ces données topographiques numérisées sont repérées de manière traditionnelle selon un repère maillé.

Dans une deuxième étape, on détermine à partir de ces données topographiques, les dangers potentiels du relief sous-jacent aux zones à palper à droite et à gauche.

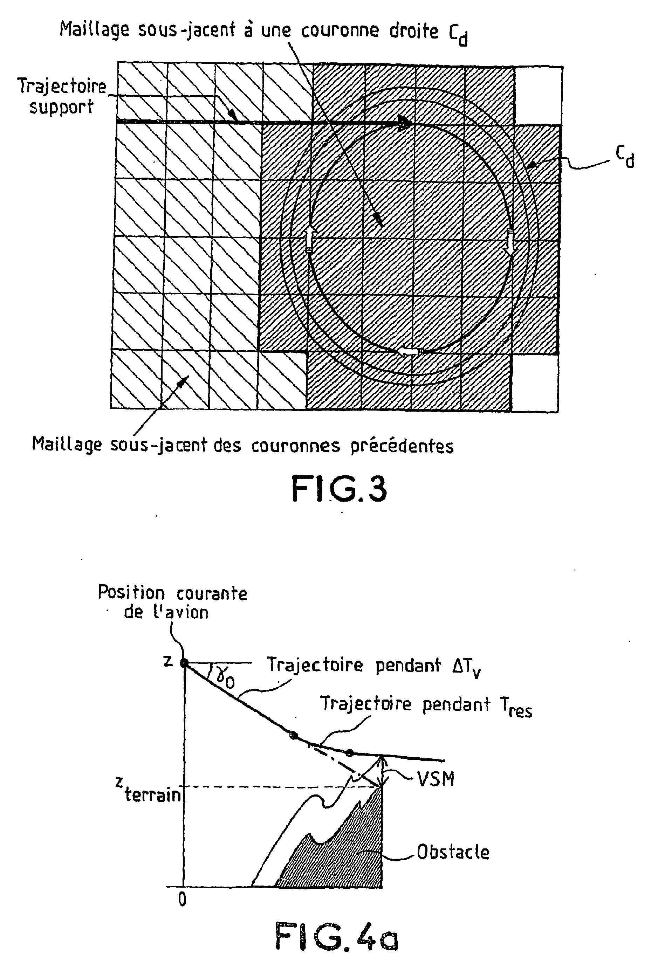

Pour ce faire, on paramètre les zones à palper afin de pouvoir extraire de la base de données terrain, les mailles de relief numérisé correspondant à ces zones, et on palpe toutes les mailles dont au moins un sommet appartient à une zone à palper. On a représenté dans le plan horizontal figure 3 les mailles correspondant à une couronne droite Cd ainsi que les mailles de couronnes précédentes.

Pour chaque maille testée, on détermine le danger potentiel en comparant Z critique à $Z_{relief}$ + VSM,

$Z_{relief}$ étant l'altitude de la maille considérée,

VSM, une marge de sécurité verticale variant par exemple avec la distance entre l'avion et l'aéroport le plus proche, cette marge de sécurité pouvant valoir par exemple 100 m.

et Z critique étant une altitude fictive définie comme étant l'altitude qu'aurait l'avion au survol de la maille dans le cas où :

s'il est en montée la montée, la montée serait immédiatement interrompue,

s'il est en descente, la descente serait continuée sans changement

s'il est en palier, le palier serait continué sans changement.

On identifie ainsi les mailles latérales présentant un danger, c'est-à-dire telles que $Z_{critique} < Z_{relief} + VSM$. Ces mailles dangereuses peuvent être mises en évidence, notamment affichées sur un écran à l'attention du pilote.

Pour chacune des mailles dangereuses, on évalue au cours d'une troisième étape, le temps $\Delta T$ restant avant le début de la manoeuvre d'évitement, c'est-à-dire le temps de réaction $T_{réac}$ maximal dont dispose le pilote avant d'effectuer une ressource dans le plan vertical.

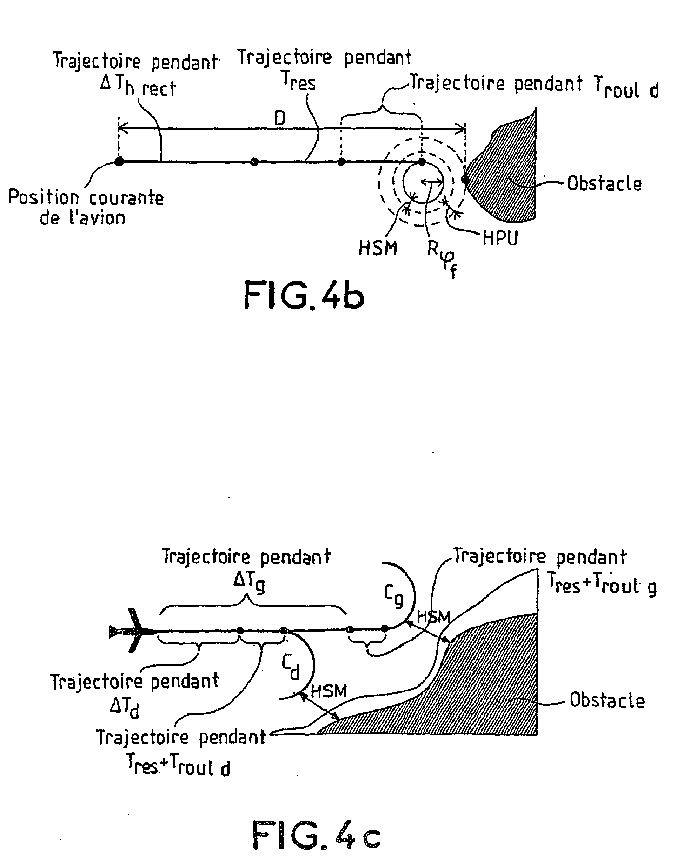

Ce temps restant $\Delta T$ est évalué en reconstituant un temps de vol fictif vers le point réputé dangereux, c'est-à-dire l'obstacle de la maille dangereuse. Ce temps de vol est évalué dans le plan vertical comme illustré figure 4a ; il est aussi évalué dans le plan horizontal comme illustré figure 4b, en distinguant le cas du vol rectiligne de celui du vol en virage.

Le temps $\Delta T$ est égal au maximum des temps correspondant au plan horizontal et au plan vertical pour le cas où l'avion est en descente, et au seul temps de vol horizontal pour le cas où l'avion est en montée ou en palier.

$$\Delta T = \begin{cases} \Delta T_{h\,rect} & \text{montée, rectiligne,} \\ \Delta T_{h\,vir} & \text{montée, virage,} \\ \max(\Delta T_{h\,rect}, \Delta T_v) & \text{descente, rectiligne,} \\ \max(\Delta T_{h\,vir}, \Delta T_v) & \text{descente, virage,} \end{cases}$$

$\Delta T_{h\,rect}$ désignant le temps restant dans le plan horizontal lorsque la trajectoire courante l'avion est rectiligne, $\Delta T_{h\,vir}$ désignant le temps restant dans le plan horizontal lorsque la trajectoire courante de l'avion est en virage, $\Delta T_v$ désignant le temps restant dans le plan vertical quelle que soit la trajectoire courante de l'avion. Il s'agit plus précisément du temps restant au pilote avant d'effectuer une ressource pour obtenir une trajectoire horizontale permettant, sans manoeuvre d'évitement latéral, d'éviter l'obstacle identifié dans la maille dangereuse considérée, compte tenu d'une marge de sécurité VSM : dans la pratique on a généralement $\max(\Delta T_h, \Delta T_v) = \Delta T_h$, sauf si comme représenté figure 4a, $\Delta T_v$ permet au pilote de survoler l'obstacle.

On a :

$$\Delta T_{hrect} = \frac{D - R_{\varphi f} - HSM - HPU}{V} - T_{res} - T_{roul}$$

$$\Delta T_{hvir} = \frac{2R_{\varphi i} * \arcsin\left(\dfrac{D - R_{\varphi f} - HSM - HPU}{2R_{\varphi i}}\right)}{V} - T_{res} - T_{roul}$$

avec comme indiqué figure 4b dans le cas d'une trajectoire rectiligne, D la distance entre la position courante de l'avion et l'obstacle, $R_{\varphi f}$ le rayon du cercle d'évitement, $R_{\varphi i}$ le rayon du virage en cours, HSM, une marge de sécurité horizontale et HPU une incertitude sur la position courante et V la vitesse courante de l'avion ; on prend $AT_{h\,vir} = T_{réac}$ si l'arcsinus est indéfini.

$$\text{Et} \quad \Delta T_v = \frac{z - (z_{terrain} + VSM) - \dfrac{V^2}{fcv}(1 - \cos\gamma_0)}{-V\sin\gamma_0}$$

avec comme indiqué figure 4a, z l'altitude courante de l'avion, $Z_{terrain}$ l'altitude de l'obstacle, VSM, une marge de sécurité verticale, V la vitesse courante de l'avion, fcv le facteur de charge vertical de l'avion et $\gamma_0$ sa pente.

Pour chacun des côtés droit et gauche, on identifie alors sur l'ensemble des mailles dangereuses, le minimum de ces $\Delta T$ et on le note $\Delta T_{droite}$ et $\Delta T_{gauche}$. Ces $\Delta T_{droite}$ et $\Delta T_{gauche}$ correspondent aux mailles dangereuses droite et gauche les plus proches, comme illustré figure 4c ; là encore, on peut mettre ces mailles en évidence, à l'attention du pilote.

Il se peut que l'un de ces $\Delta T_{droite}$ ou $T_{gauche}$ n'existe pas lorsque par exemple, aucune maille dangereuse n'a été identifiée sur un des côtés.

Comme illustré dans le plan horizontal figure 4c, le temps restant pour le côté le plus critique, c'est-à-dire le moins sûr (côté droit sur la figure) désigné par « Worst Lateral » ou « WL » est celui correspondant au minimum entre $\Delta T_{droite}$ et $\Delta T_{gauche}$ et le temps restant pour le côté le plus sûr (côté gauche sur la figure) désigné par « Best Lateral » ou « BL » celui correspondant au temps de réaction $T_{réac}$ maximal qui est égal au maximum entre $\Delta T_{droite}$ et $\Delta T_{gauche}$.

La quatrième étape correspondant à une étape de gestion des alertes débute alors.

Lorsque « B L » et « WL » existent, ils sont comparés à des temps prédéterminés, tels que par exemple un temps $T_{avertissement}$ et un temps $T_{alarme}$ (respectivement «$T_{caution}$» et « $T_{warning}$» en anglais). On a par exemple $T_{avertissement}$ = 20 sec et $T_{alarme}$ = 8 sec.

On peut alors distinguer quatre classes pour chaque côté :

« Infini» lorsque « BL » (respectivement « W L ») est supérieur à $T_{avertissement}$,

« Danger » lorsque « BL » (respectivement « WL ») est inférieur ou égal à $T_{avertissement}$ et supérieur à $T_{alarme}$,

« Critique » lorsque « BL » (respectivement « W L ») est inférieur ou égal à $T_{alarme}$ et supérieur à 0 seconde,

« Fatal » ou « impossible » lorsque « BL » (respectivement « WL ») est inférieur ou égal à 0 seconde.

On peut également définir les mêmes classes pour un temps restant vertical Tv ; on se reportera par exemple aux brevets précités pour le calcul de Tv.

En combinant ces quatre classes pour chacun des Tv, « B L » et « WL » on obtient des sous-classes, auxquelles on associe des avis et/ou des conseils et/ou des ordres, comme indiqué dans le tableau ci-dessous dans lequel les sous-classes sont repérées par un numéro variant de 1 à 40.

| | Vertical | Côté le plus sûr (« BL ») | Côté le moins sûr (« WL »). | Avis | Conseils | Ordres |
|---|---|---|---|---|---|---|
| 1 | Infini | Infini | Infini | | Continuer trajectoire | |
| 2 | Infini | Infini | Danger | Avertissement WL | Continuer trajectoire (éviter virage WL) | |
| 3 | Infini | Infini | Critique | Alarme WL | Continuer trajectoire (éviter virage WL) | |
| 4 | Infini | Infini | Impossible | Eviter WL | Continuer trajectoire (éviter virage WL) | |
| 5 | Infini | Danger | Danger | Avertissement Latéral | Continuer trajectoire (éviter virage latéral) | |
| 6 | Infini | Danger | Critique | Alarme WL/ Avertissement BL | Continuer trajectoire (éviter virage latéral) | |
| 7 | Infini | Danger | Impossible | Eviter WUAvertissement BL | Continuer trajectoire (éviter virage latéral) | |

(suite)

| | Vertical | Côté le plus sûr (« BL ») | Côté le moins sûr (« WL »). | Avis | Conseils | Ordres |
|---|---|---|---|---|---|---|
| 8 | Infini | Critique | Critique | Alarme Latéral | Continuer trajectoire (éviter virage latéral) | |
| 9 | Infini | Critique | Impossible | Eviter WL/Alarme BL | Continuer trajectoire (éviter virage latéral) | |
| 10 | Infini | Impossible | Impossible | Eviter Latéral | Continuer trajectoire (éviter virage latéral) | |
| 11 | Danger | Infini | Infini | Avertissement Vertical | Grimper (ou virer BL) | Terrain dangereux |
| 12 | Danger | Infini | Danger | Avertissement Vertical et WL | Grimper (ou virer BL) | Terrain dangereux |
| 13 | Danger | Infini | Critique | Alarme WL/ avertissement Vertical | Grimper (ou virer BL) | Terrain dangereux |
| 14 | Danger | Infini | Impossible | Eviter WL/ Avertissement Vertical | Grimper (ou virer BL) | Terrain dangereux |
| 15 | Danger | Danger | Danger | Avertissement Vertical et Latéral | Grimper (ou virer rapidement BL) | Terrain dangereux |
| 16 | Danger | Danger | Critique | Alarme WUAvertissement Vertical et BL | Grimper (ou virer rapidement BL) | Terrain dangereux |
| 17 | Danger | Danger | Impossible | Eviter WUAvertissement Vertical et BL | Grimper (ou virer rapidement BL) | Terrain dangereux |
| 18 | Danger | Critique | Critique | AlarmeLatéral/ Avertissement Vertical | Grimper (ou virer immédiatement BL) | Terrain dangereux |
| 19 | Danger | Critique | Impossible | Eviter WL/Alarme BL /Avertissement Vertical | Grimper (ou virer immédiatement BL) | Terrain dangereux |
| 20 | Danger | Impossible | Impossible | Eviter Latéral/ Avertissement Vertical | Grimper (éviter virage latéral) | Terrain dangereux |
| 21 | Critique | Infini | Infini | Alarme Vertical | Grimper immédiatement (ou virer BL) | Monter |
| 22 | Critique | Infini | Danger | Alarme Vertical/ Avertissement WL | Grimper immédiatement (ou virer BL) | Monter |
| 23 | Critique | Infini | Critique | Alarme Vertical et WL | Grimper immédiatement (ou virer BL) | Monter |

(suite)

|  | Vertical | Côté le plus sûr (« BL ») | Côté le moins sûr (« WL »). | Avis | Conseils | Ordres |
|---|---|---|---|---|---|---|
| 24 | Critique | Infini | Impossible | EviterWL/Alarme Vertical | Grimper immédiatement (ou virer BL) | Monter |
| 25 | Critique | Danger | Danger | Alarme Vertical/ Avertissement Latéral | Grimper immédiatement (ou virer rapidement BL) | Monter |
| 26 | Critique | Danger | Critique | Alarme Vertical et WUAvertissement BL | Grimper immédiatement (ou virer rapidement BL) | Monter |
| 27 | Critique | Danger | Impossible | Eviter WL/Alarme Vertical | Grimper immédiatement (ou virer rapidement BL) | Monter |
| 28 | Critique | Critique | Critique | Alarme Vertical et Latéral | Grimper immédiatement (ou virer immédiatement BL) | Monter |
| 29 | Critique | Critique | Impossible | Eviter WL/Alarme Vertical et BL | Grimper immédiatement (ou virer immédiatement BL) | Monter |
| 30 | Critique | Impossible | Impossible | Eviter latéral/ Alarme Vertical | Grimper immédiatement (éviter virage latéral) | Monter |
| 31 | Impossible | Infini | Infini | Eviter Vertical | Virer BL | Virage BL |
| 32 | Impossible | Infini | Danger | Eviter Vertical/ Avertissement WL | Virer BL | Virage BL |
| 33 | Impossible | Infini | Critique | Eviter Vertical/ Alarme WL | Virer BL | Virage BL |
| 34 | Impossible | Infini | Impossible | Eviter Vertical et WL | Virer BL | Virage BL |
| 35 | Impossible | Danger | Danger | Eviter Vertical/ Avertissement Latéral | Virer rapidement BL | Virage BL maintenant |
| 36 | Impossible | Danger | Critique | Eviter Vertical/ Alarme WL / Avertissement BL | Virer rapidement BL | Virage BL maintenant |
| 37 | Impossible | Danger | Impossible | Eviter Vertical et WL/ AvertissementBL | Virer rapidement BL | Virage BL maintenant |
| 38 | Impossible | Critique | Critique | Eviter Vertical/ Avertissement Latéral | Virer immédiatement BL | Virage BL immédiat |
| 39 | Impossible | Critique | Impossible | Eviter Vertical et WL/Alarme BL | Virer immédiatement BL | Virage BL immédiat , |
| 40 | Impossible | Impossible | Impossible | Collision terrain | Collision terrain | Collision terrain |

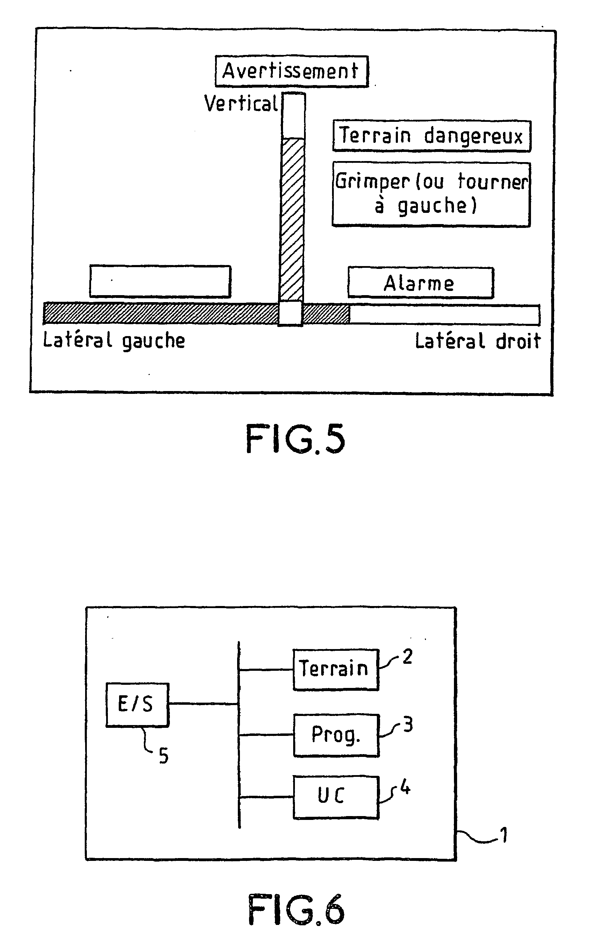

Des informations établies à partir de ce tableau peuvent être affichées par exemple sous forme de zones de couleurs dont le remplissage est proportionnel aux valeurs respectives de Tv, $\Delta T_{droite}$ et $\Delta T_{gauche}$. Un exemple de présentation de ces informations est illustré figure 5.

On va à présent décrire la manoeuvre d'évitement latéral proprement dite, intervenant au bout d'un temps inférieur ou égal à $T_{réac}$ maximal+$T_{res}$+$T_{roul}$.

Il s'agit d'une manoeuvre circulaire accomplie dans le plan horizontal tangent au tronçon de trajectoire précédent, dans le sens correspondant à celui préconisé à l'issue de l'étape précédente et dont le rayon R est classiquement de la forme :

$$R = V_{vir}^2./ (g.tang\ \varphi)$$

$V_{vir}$ étant la vitesse en virage, g, l'accélération due à l'attraction terrestre (g=9,81 m/s$^2$), $\varphi$, l'angle de roulis.

La vitesse $V_{vir}$ à laquelle est effectuée le virage est égale à la vitesse de l'avion lors de sa position courante, majorée de 10% par exemple tout en étant limitée à un maximum $V_{max}$ dépendant de la réglementation et de la configuration de l'avion. On a par exemple pour un avion de type A340, $V_{max}$ variant selon sa configuration (train et/ou volets sortis) entre 180 noeuds et 205 noeuds (1 noeud $\cong$1852 m/h).

Le procédé selon l'invention est mis en oeuvre dans un dispositif d'aide à la navigation de préférence embarqué à bord de l'avion ; le dispositif peut éventuellement faire partie d'un système de téléguidage de l'avion.

Comme représenté figure 6, le dispositif 1 d'aide à la navigation comporte de manière traditionnelle au moins une mémoire de masse 2 apte à stocker une base de données terrain, une mémoire de programme 3 comportant un programme d'application du procédé décrit, une unité centrale 4 apte à mettre en oeuvre le programme et une interface d'entrée-sortie 5.

Les calculs sont dans leur ensemble effectués par exemple selon une cadence de 100 millisecondes.

## Revendications

**1.** Procédé d'aide à la navigation d'un aéronef, **caractérisé en ce qu'**il comprend les étapes suivantes consistant à :

> a) définir une zone à palper à droite et à gauche d'une première trajectoire fictive de l'aéronef, désignée par trajectoire support de palpeur,
> b) palper pour chacune des deux zones à palper à droite et à gauche, un relief sous-jacent correspondant prédéterminé, en vue d'identifier des sous-zones dangereuses à droite et/ou à gauche,
> c) calculer pour chacune des sous-zones dangereuses à droite et/ou à gauche, un temps $\Delta T$ restant pour débuter une manoeuvre d'évitement avant un point de non retour, et déterminer pour les sous-zones dangereuses à droite un $\Delta T$ minimal noté $\Delta T$ droite et/ou pour les sous-zones dangereuses à gauche un $\Delta T$ minimal noté $\Delta T$ gauche,
> d) établir une aide à la navigation à partir de $\Delta T$ droite et/ou $\Delta T$ gauche.

**2.** Procédé selon la revendication précédente, **caractérisé en ce que** la trajectoire support de palpeur est déterminée pendant un temps T décomposé en un temps $T_{réac}$ de réaction du pilote, un temps $T_{res}$ de mise en trajectoire horizontale de l'aéronef et un temps $T_{roul}$ de mise en roulis de l'aéronef.

**3.** Procédé selon l'une quelconque des revendications précédentes, **caractérisé en ce que** la zone à palper droite et/ou gauche est définie en fonction de couronnes se succédant les unes aux autres, chaque couronne présentant un diamètre D de la forme D= d + marge de sécurité, d étant le diamètre d'une manoeuvre d'évitement circulaire.

**4.** Procédé selon l'une quelconque des revendications précédentes, **caractérisé en ce que** les zones à palper sont définies en fonction de la trajectoire courante rectiligne ou en virage de l'aéronef.

**5.** Procédé selon l'une quelconque des revendications précédentes, **caractérisé en ce qu'**il comporte une étape préalable à l'étape b) consistant à paramétrer les zones de manière à permettre de palper le relief sous-jacent à ces zones.

**6.** Procédé selon la revendication précédente, **caractérisé en ce que** les zones et le relief sont paramétrés selon un repère maillé.

**7.** Procédé selon l'une quelconque des revendications précédentes, **caractérisé en ce que** les sous-zones dangereuses de l'étape b) sont identifiées en fonction d'une deuxième trajectoire fictive de l'aéronef telle que :

dans le cas où l'aéronef est en montée, la montée est immédiatement interrompue,
dans les autres cas, la trajectoire est poursuivie sans changement.

**8.** Procédé selon l'une quelconque des revendications précédentes, **caractérisé en ce que** le temps $\Delta T$ de l'étape c) est calculé en fonction d'un temps de vol fictif vers une sous-zone dangereuse, évalué en fonction d'un temps $T_{res}$ de mise en trajectoire horizontale de l'aéronef et d'un temps $T_{roul}$ de mise en roulis de l'aéronef :

dans un plan horizontal lorsque l'aéronef est en montée ou en palier,
dans un plan horizontal et dans un plan vertical lorsque l'aéronef est en descente.

**9.** Procédé selon l'une quelconque des revendications précédentes, **caractérisé en ce que** l'étape d) comporte une étape de comparaison de $\Delta T$ droite et/ou $\Delta T$ gauche à un ou plusieurs temps prédéterminés.

**10.** Procédé selon l'une quelconque des revendications précédentes, **caractérisé en ce que** l'étape d) comporte une étape consistant à déterminer le temps restant pour le côté le plus sûr à partir du maximum entre $\Delta T$ droite et/ou $\Delta T$ gauche et le temps restant pour le côté le moins sûr à partir du minimum entre $\Delta T$ droite et/ou $\Delta T$ gauche.

**11.** Procédé selon l'une quelconque des revendications précédentes, **caractérisé en ce qu'**il comporte une étape consistant à générer une manoeuvre d'évitement latéral.

**12.** Dispositif (1) d'aide à la navigation d'un aéronef, comportant une mémoire de masse (2) apte à stocker une base de données terrain, une mémoire de programme (3) comportant un programme d'application du procédé selon l'une quelconque des revendications précédentes, une unité centrale (4) apte à mettre en oeuvre le programme et une interface d'entrée-sortie (5).

## Claims

**1.** A process for aiding aircraft navigation, **characterised in that** it includes the following steps, which consist in:

a) defining a zone to be scanned to the right and to the left of a first theoretical path of the aircraft, designated as the scanner support path,
b) scanning, for each of the two zones to be scanned to the right and to the left, a predetermined corresponding subjacent relief in order to identify dangerous sub-zones to the right and to the left,
c) calculating, for each of the dangerous sub-zones to the right and to the left, a time $\Delta T$ remaining to begin an avoidance manoeuvre before a point of no return, and determining, for the dangerous sub-zones to the right, a minimum $\Delta T$, denoted $\Delta T$ right, and/or for the dangerous sub-zones to the left, a minimum $\Delta T$, denoted $\Delta T$ left,
d) establishing a navigation aid from $\Delta T$ right and/or $\Delta T$ left.

**2.** The process according to the previous claim, **characterised in that** the scanner support path is determined during a time T which is divided into a pilot reaction time $T_{reac}$, a time $T_{res}$ for orienting the aircraft on a horizontal path and a time $T_{roul}$ for putting the aircraft into a rolling movement.

**3.** The process according to any one of the previous claims, **characterised in that** the zone to be scanned to the right and/or to the left is defined as a function of circles which succeed one another, each circle having a diameter D in the form D=d + safety margin, d being the diameter of a circular avoidance manoeuvre.

**4.** The process according to any one of the previous claims, **characterised in that** the zones to be scanned are defined as a function of the current straight or turning path of the aircraft.

**5.** The process according to any one of the previous claims, **characterised in that** it includes a step before step b) which consists in configuring the zones so as to allow the relief subjacent to these zones to be scanned.

**6.** The process according to the previous claim, **characterised in that** the zones and the relief are configured according to a grid reference.

**7.** The process according to any one of the previous claims, **characterised in that** the dangerous sub-zones of step b) are identified as a function of a second theoretical path of the aircraft so that:

   if the aircraft is ascending, the ascent is immediately interrupted,
   in other cases, the path continues unaltered.

**8.** The process according to any one of the previous claims, **characterised in that** the time $\Delta T$ of step c) is calculated as a function of the time of a theoretical flight to a dangerous sub-zone, assessed as a function of a time $T_{res}$ for orienting the aircraft on a horizontal path and a time $T_{roul}$ for putting the aircraft into a rolling movement:

   in a horizontal plane when the aircraft is ascending or flying level,
   in a horizontal plane and in a vertical plane when the aircraft is descending.

**9.** The process according to any one of the previous claims, **characterised in that** step d) includes a step of comparing the $\Delta T$ right and/or $\Delta T$ left to one or more predetermined times.

**10.** The process according to any one of the previous claims, **characterised in that** step d) includes a step which consists in determining the remaining time for the safest side from the maximum between $\Delta T$ right and/or $\Delta T$ left and the time remaining for the least safe side from the minimum between $\Delta T$ right and/or $\Delta T$ left.

**11.** The process according to any one of the previous claims, **characterised in that** it includes a step which consists in generating a lateral avoidance manoeuvre.

**12.** A device (1) for aiding aircraft navigation, including a mass memory (2) designed for storing a terrain database, a programme memory (3) including a programme for application of the process according to any one of the previous claims, a central unit (4) designed for implementing the programme and an input-output interface (5).

**Patentansprüche**

**1.** Verfahren zur Flugfahrzeugnavigationsunterstützung, **dadurch gekennzeichnet,, dass** es die folgenden Schritte beinhaltet, bestehend aus:

   a) Definieren einer Zone, die rechts und links von einer als Abtastunterstützungsbahn bezeichneten ersten fiktiven Flugbahn des Flugfahrzeugs abgetastet werden soll,
   b) Abtasten, für jede der beiden links und rechts abzutastenden Zonen, eines vorbestimmten entsprechenden darunter befindlichen Reliefs, um gefährliche Subzonen links und rechts zu identifizieren,
   c) Berechnen, für jede der gefährlichen Subzonen rechts und/oder links, einer Restzeit $\Delta T$ zum Beginnen eines Ausweichmanövers vor dem Erreichen eines Punkts ohne Wiederkehr, und Ermitteln, für die gefährlichen Subzonen rechts, eines Mindest-$\Delta T$, $\Delta T$ rechts genannt, und/oder für die gefährlichen Subzones links, eines Mindest-$\Delta T$, $\Delta T$ links genannt,
   d) Erstellen einer Navigationshilfe von $\Delta T$ rechts und/oder $\Delta T$ links.

**2.** Verfahren nach dem vorherigen Anspruch, **dadurch gekennzeichnet, dass** die Abtastunterstützungsbahn während einer Zeit T ermittelt wird, die in eine Pilotreaktionszeit $T_{reac}$, eine Zeit $T_{res}$, um das Flugfahrzeug in die Horizontale zu bringen, und eine Zeit $T_{roul}$, um das Flugfahrzeug in eine Rollbewegung zu bringen, unterteilt wird.

**3.** Verfahren nach einem der vorherigen Ansprüche, **dadurch gekennzeichnet, dass** die rechts und/oder links abzutastende Zone in Abhängigkeit von aufeinander folgenden Kreisen definiert wird, wobei jeder Kreis einen Durchmesser D in der Form D=d + Sicherheitsmarge hat, wobei d der Durchmesser eines kreisförmigen Ausweichmanövers ist.

**4.** Verfahren nach einem der vorherigen Ansprüche, **dadurch** gekennzeichet, dass die abzutastenden Zonen je nach dem aktuellen Gerade- oder Kurvenflug des Flugfahrzeugs definiert werden.

**5.** Verfahren nach einem der vorherigen Ansprüche, **dadurch gekennzeichnet, dass** es einen Schritt vor Schritt b) beinhaltet, der darin besteht, die Zonen so zu konfigurieren, dass das Relief unterhalb dieser Zonen abgetastet werden kann.

**6.** Verfahren nach dem vorherigen Anspruch, **dadurch gekennzeichnet, dass** die Zonen und das Relief gemäß einer Gitterreferenz konfiguriert werden.

**7.** Verfahren nach einem der vorherigen Ansprüche, **dadurch gekennzeichnet, dass** die gefährlichen Subzonen von Schritt b) in Abhängigkeit von einer zweiten fiktiven Flugbahn des Flugfahrzeugs identifiziert werden, so dass:

wenn das Flugfahrzeug im Steigen begriffen ist, der Steigflug sofort unterbrochen wird,
in anderen Fällen die Flugbahn unverändert fortgesetzt wird.

**8.** Verfahren nach einem der vorherigen Ansprüche, **dadurch gekennzeichnet, dass** die Zeit $\Delta T$ von Schritt c) in Abhängigkeit von einer Zeit eines fiktiven Flugs in eine gefährliche Subzone berechnet wird, beurteilt in Abhängkeit von einer Zeit $T_{res}$, um das Flugfahrzeug in die Horizontale zu bringen, und einer Zeit $T_{roul}$, um das Flugfahrzeug in eine Rollbewegung zu bringen:

in einer horizontalen Ebene, wenn das Flugfahrzeug steigt oder waagerecht fliegt,
in einer horizontalen Ebene und in einer vertikalen Ebene, wenn das Flugfahrzeug im Sinkflug ist.

**9.** Verfahren nach einem der vorherigen Ansprüche, **dadurch gekennzeichnet, dass** Schritt d) einen Schritt des Vergleichens von $\Delta T$ rechts und/oder $\Delta T$ links mit einer oder mehreren vorbestimmten Zeiten beinhaltet.

**10.** Verfahren nach einem der vorherigen Ansprüche, **dadurch gekennzeichnet, dass** Schritt d) einen Schritt beinhaltet, der darin besteht, die Restzeit für die sicherste Seite vom Maximum zwischen $\Delta T$ rechts und/oder $\Delta T$ links und die Restzeit für die am wenigsten sichere Seite vom Minimum zwischen $\Delta T$ rechts und/oder $\Delta T$ links zu ermitteln.

**11.** Verfahren nach einem der vorherigen Ansprüche, **dadurch gekennzeichnet, dass** es einen Schritt beinhaltet, der darin besteht, ein seitliches Ausweichlnanöver zu erzeugen.

**12.** Vorrichtung (1) zur Flugfahrzeugnavigationsunterstützung, die einen Massenspeicher (2) zum Speichern einer Geländedatenbank, einen Programmspeicher (3) mit einem Programm zum Anwenden des Verfahrens nach einem der vorherigen Ansprüche, eine Zentraleinheit (4) zum Impleinentieren des Programms und eine Ein- /Ausgabeschnittstelle (5) umfasst.

HPU          HSM

$C_g$

Trajectoire
support de palpeur

$C_d$

d D

## FIG.1

Trajectoire pendant $T_{reac}$

Trajectoire pendant $T_{res}$

Trajectoire pendant $T_{roul}$

Position courante
de l'avion

d

Manoeuvre d'évitement
circulaire

## FIG.2c

$D = d + \text{marges}$

$C_g$ à $t''$

$C_g$ à $t'$

$C_g$ à $t$

$T_{reac} + T_{res} + T_{roul}$

Trajectoire support de palpeur

Limites zone à palper gauche

Limites zone à palper droite

Position courante de l'avion

## FIG.2a

Trajectoire support de palpeur

Limites zone à palper gauche

Limites zone à palper droite

$T_{roul\ g}$

$T_{reac} + T_{res}$

$C$

$C'$

$T_{roul\ d}$

Position courante de l'avion

## FIG.2b

Maillage sous-jacent à une couronne droite $C_d$

Trajectoire support

$C_d$

Maillage sous-jacent des couronnes précédentes

# FIG.3

Position courante de l'avion

z

$\gamma_0$

Trajectoire pendant $\Delta T_v$

Trajectoire pendant $T_{res}$

VSM

$z_{terrain}$

Obstacle

0

# FIG.4a

Trajectoire pendant
ΔT$_{h\ rect}$

Trajectoire pendant
T$_{res}$

Trajectoire pendant T$_{roul\ d}$

D

Position courante
de l'avion

Obstacle

HSM    R$\varphi_f$    HPU

## FIG.4b

Trajectoire pendant
ΔT$_g$

Trajectoire pendant
T$_{res}$+T$_{roul\ g}$

C$_g$

HSM

C$_d$

HSM

Trajectoire pendant
ΔT$_d$

Obstacle

Trajectoire pendant
T$_{res}$+T$_{roul\ d}$

## FIG.4c

## FIG.5

## FIG.6

**EP 1 523 655 B1**

## RÉFÉRENCES CITÉES DANS LA DESCRIPTION

**Documents brevets cités dans la description**

- EP 0565399 A

- EP 0802469 A